# EUROPEAN PATENT APPLICATION

(11) **EP 3 438 921 A1**
(43) Date of publication of application: **06.02.2019**
(21) Application number: 16900937.0
(22) Date of filing: 05.07.2016
(51) Int. Cl.: G06T 5/00, G06T 7/11, G06T 7/136, H04N 5/235

(54) **IMAGE OPTIMIZATION METHOD AND DEVICE, AND TERMINAL**

(30) Priority: 05.05.2016 CN 201610293530
(71) Applicant: ZTE Corporation, Shenzhen, Guangdong 518057 (CN)
(72) Inventor: HU, Wendi, Shenzhen Guangdong 518057 (CN)
(74) Representative: AWA Sweden AB
(86) International application number: PCT/CN2016/088609
(87) International publication number: WO 2017/190415

(57) **Abstract**

Provided are an image optimization method and device, and a terminal. The method may include: acquiring picture depth-of-field information of an image to be optimized; and optimizing the image to be optimized according to the picture depth-of-field information.

## Description

### Technical Field

The present invention relates, but is not limited, to the field of image processing, and in particular to an image optimization method and device, and a terminal.

### Background

A main scene of a picture may be dominant in a processing method of the existing art if there is a scene where outdoor and indoor light sources and intensities are different in the picture when photographing or processing an image at a later stage. For example, when an indoor scene is dominant, an optimization effect of the scene outside a window would be sacrificed, and an outdoor scene would be trapped in overexposure and color cast. In the existing art, those skilled in the art have proposed to mitigate degrees of overexposure and color cast through balancing and debugging between the outdoor scene and the indoor scene. However, adjustment of a weight of the outdoor scene and the indoor scene would inevitably lead to sacrifice of part of the optimization effect of the main scene, and it is hard to better balance the outdoor optimization effect and the indoor optimization effect.

### Summary

The following is an overview of the subject described in the present document in detail. The overview is not intended to limit the scope of protection of claims.

The present invention provides an image optimization method and device, and a terminal, which may solve the problem that a background optimization effect is sacrificed during full-image optimization where a main body prevails in the image optimization method in the existing art.

The present invention provides an image optimization method, which includes:
picture depth-of-field information of an image to be optimized is acquired; and
the image to be optimized is optimized according to the picture depth-of-field information.

In an exemplary embodiment, in the above image optimization method, the step that the picture depth-of-field information of the image to be optimized is acquired includes that: the image to be optimized is measured through a dual-camera algorithm, a laser focusing method or a software algorithm to acquire the picture depth-of-field information.

In an exemplary embodiment, in the above image optimization method, the step that the image to be optimized is optimized according to the picture depth-of-field information includes that: the image to be optimized is partitioned into an indoor area and an outdoor area according to the picture depth-of-field information; and different Auto White Balances (AWB) and/or Auto Exposure Controls (AEC) are applied respectively to the indoor area and the outdoor area.

In an exemplary embodiment, in the above image optimization method, the step that the image to be optimized is partitioned into the indoor area and the outdoor area according to the picture depth-of-field information includes that: a depth-of-field value corresponding to each pixel point is determined according to the picture depth-of-field information, the image to be optimized is partitioned into two or more target areas according to the depth-of-field value corresponding to each pixel point, where a difference between the depth-of-field values of adjacent pixel points within an identical target area is less than a threshold. A ratio of average depth-of-field values of each target area and its adjacent target area and a ratio of average values of white balance/exposure of each target area and its adjacent target area are calculated. When the ratio of the average depth-of-field values of a target area and its adjacent target area and the ratio of the average values of the white balance/exposure of a target area and its adjacent target area are greater than the corresponding thresholds, the target area and its adjacent target area are respectively determined as the indoor area and the outdoor area.

In an exemplary embodiment, in the above image optimization method, the step that the image to be optimized is optimized according to the picture depth-of-field information includes that: a denoising matrix and a sharpening matrix of each pixel point in the image to be optimized are calculated according to the picture depth-of-field information, and the image of each pixel point in the image to be optimized are denoised and sharpened according to the denoising matrix and the sharpening matrix of the each pixel point.

In an exemplary embodiment, in the above image optimization method, the step that the denoising matrix and the sharpening matrix of each pixel point in the image to be optimized are calculated according to the picture depth-of-field information includes that: the depth-of-field value of each pixel point is determined according to the picture depth-of-field information, the depth-of-field value of the each pixel point is normalized to acquire a matrix weighting coefficient of each pixel point, and the denoising matrix and the sharpening matrix of the each pixel point are calculated according to the matrix weighting coefficient, a standard denoising matrix and a standard sharpening matrix.

In an exemplary embodiment, in the above image optimization method, the step that the depth-of-field value of the each pixel point is normalized to acquire the matrix weighting coefficient of each pixel point includes that: the matrix weighting coefficient of each pixel point is acquired by normalizing with γa=Da/(Df-Dn), where a represents any pixel point in the image, n and f represent the pixel points at which a straight line, which passes through a and is vertical to edges of the image, intersects with the edges of the image, Da, Df and Dn represent the depth-of-field values corresponding to the pixel points a, f and n respectively, and γa represents the matrix weighting coefficient of the pixel point a.

The present invention further discloses an image optimization device, which includes:
an acquiring module configured to acquire picture depth-of-field information of an image to be optimized; and
an optimizing module configured to optimize the image to be optimized according to the picture depth-of-field information.

In an exemplary embodiment, in the above image optimization device, that the acquiring module acquires the picture depth-of-field information of the image to be optimized includes that: the image to be optimized is measured through a dual-camera algorithm, a laser focusing method or a software algorithm to acquire the picture depth-of-field information.

In an exemplary embodiment, in the above image optimization device, that the optimizing module optimizes the image to be optimized according to the picture depth-of-field information includes that: the image to be optimized is partitioned into an indoor area and an outdoor area according to the picture depth-of-field information; and different Auto White Balances (AWB) and/or Auto Exposure Controls (AEC) are applied respectively to the indoor area and the outdoor area.

In an exemplary embodiment, in the above image optimization device, that the optimizing module partitions the image to be optimized into the indoor area and the outdoor area according to the picture depth-of-field information includes that: the depth-of-field value corresponding to each pixel point is determined according to the picture depth-of-field information, and the image to be optimized is partitioned into two or more target areas according to the depth-of-field value corresponding to each pixel point, where a difference between the depth-of-field values of adjacent pixel points in a same target area is less than a threshold; a ratio of average depth-of-field values of each target area and its adjacent target area and a ratio of average values of white balance/exposure of each target area and its adjacent target area are calculated, and a target area and its adjacent target area are respectively determined as the indoor area and the outdoor area when both the ratio of the average depth-of-field values of the target area and its adjacent target area and the ratio of the average values of the white balance/exposure of the target area and its adjacent target area are greater than the corresponding thresholds.

In an exemplary embodiment, in the above image optimization device, that the optimizing module optimizes the image to be optimized according to the picture depth-of-field information includes that: a denoising matrix and a sharpening matrix of each pixel point in the image to be optimized are calculated according to the picture depth-of-field information, and the image of each pixel point in the image to be optimized is denoised and sharpened according to the denoising matrix and the sharpening matrix of the each pixel point.

In an exemplary embodiment, in the above image optimization device, that the optimizing module calculates the denoising matrix and the sharpening matrix of each pixel point in the image to be optimized according to the picture depth-of-field information includes that: the depth-of-field value of each pixel point is determined according to the picture depth-of-field information, a matrix weighting coefficient of each pixel point is acquired by normalizing the depth-of-field value of the each pixel point, and the denoising matrix and the sharpening matrix of the each pixel point are calculated according to the matrix weighting coefficient, a standard denoising matrix and a standard sharpening matrix.

In an exemplary embodiment, in the above image optimization device, that the optimizing module normalizes the depth-of-field value of the each pixel point to acquire the matrix weighting coefficient of each pixel point includes that: the matrix weighting coefficient of each pixel point is acquired by normalizing with γa=Da/(Df-Dn), where a represents any pixel point in the image, n and f represent the pixel points at which a straight line, which passes through a and is vertical to edges of the image, intersects with the edges of the image, Da, Df and Dn represent the depth-of-field values corresponding to the pixel points a, f and n respectively, and γ a represents the matrix weighting coefficient of the pixel point a.

The present document further discloses a terminal, which includes the image optimization device as mentioned above.

The present document provides an image optimization scheme, through which picture depth-of-field information of an image is acquired, and the image is optimized on the basis of the picture depth-of-field information. Because the picture depth-of-field information is proportional to noise and sharpness of a scene corresponding to each pixel point in the image, the scene close to human eyes has the greatest sharpness and minimum noise and is in line with observation experiences of human eyes after image optimization.

Other aspects may be understood after reading and comprehending drawings and detailed description.

### Brief Description of Drawings

FIG. 1 is a structure diagram of an image optimization device provided by an embodiment one of the present invention.
FIG. 2 is a flow chart of an image optimization method provided by an embodiment two of the present invention.
FIG. 3 is a flow chart of an image optimization method provided by an embodiment three of the present invention.
FIG. 4 is a schematic diagram of an image to be optimized in an embodiment three of the present invention.
FIG. 5 is a flow chart of an image optimization method provided by an embodiment four of the present invention.
FIG. 6 is a schematic diagram of an image to be optimized in an embodiment four of the present invention.

### Detailed Description

Embodiments of the present invention will be described in detail below in combination with drawings. It is to be noted that the embodiments in the application and characteristics in the embodiments may be arbitrarily combined with each other without conflicts.

### Embodiment One

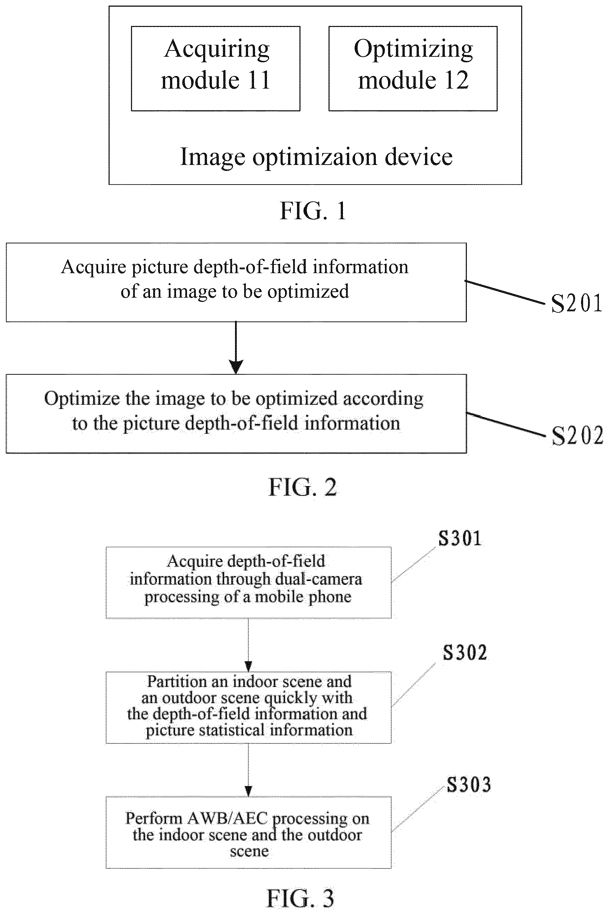

FIG. 1 is a structure diagram of an image optimization device provided by embodiment one of the present invention. From FIG. 1, the image optimization device in the embodiment includes an acquiring module 11 and an optimizing module 12.

The acquiring module 11 is configured to acquire picture depth-of-field information of an image to be optimized. The picture depth-of-field information refers to a depth-of-field value of each pixel point in the image, and the depth-of-field value of the pixel point is proportional to a distance from a scene of the pixel point to a camera.

The optimizing module 12 is configured to optimize the image to be optimized according to the picture depth-of-field information.

In an exemplary embodiment, the acquiring module 11 in the above mentioned embodiment is configured to measure the image to be optimized through a dual-camera algorithm, a laser focusing method or a software algorithm to acquire the picture depth-of-field information. In practical application, if a terminal has multiple cameras, the picture depth-of-field information may be calculated with the dual-camera algorithm during photographing.

In an exemplary embodiment, the optimizing module 12 in the above mentioned embodiment is configured to partition the image to be optimized into an indoor area and an outdoor area according to the picture depth-of-field information, and apply different Auto White Balances (AWB) and/or Auto Exposure Controls (AEC) respectively to the indoor area and the outdoor area.

In an exemplary embodiment, the optimizing module 12 in the above mentioned embodiment is configured to determine the depth-of-field value corresponding to each pixel point according to the picture depth-of-field information, partition the image to be optimized into at least one target area having different depth-of-fields according to the depth-of-field value corresponding to each pixel point, a difference of the depth-of-field value of each pixel point in the target area being less than a threshold; calculate a ratio of depth-of-field values of each target area and its adjacent target area and a ratio of white balance/exposure of them and partition a target area and its adjacent area into the indoor area and the outdoor area when both the ratio of average depth-of-field values of the target area and its adjacent target area and the ratio of white balance/exposure of them are greater than the corresponding thresholds.

In an exemplary embodiment, the optimizing module 12 in the above mentioned embodiment is configured to calculate a denoising matrix and a sharpening matrix of each pixel point in the image to be optimized according to the picture depth-of-field information, and denoise and sharpen the image of each pixel point in the image to be optimized according to the denoising matrix and the sharpening matrix of each pixel point.

In an exemplary embodiment, the optimizing module 12 in the above mentioned embodiment is configured to determine the depth-of-field value of each pixel point according to the picture depth-of-field information, normalize the depth-of-field value of each pixel point to acquire a matrix weighting coefficient of each pixel point, and calculate the denoising matrix and the sharpening matrix of each pixel point according to the matrix weighting coefficient, a standard denoising matrix and a standard sharpening matrix.

In an exemplary embodiment, the optimizing module 12 in the above mentioned embodiment is configured to acquire the matrix weighting coefficient of each pixel point by normalizing with a formula γa=Da/(Df-Dn), where a represents any pixel point in the image, n and f represent the pixel points at which a straight line, which passes through a and is vertical to edges of the image, intersects with the edges of the image, Da, Df and Dn represent the depth-of-field values corresponding to the pixel points a, f and n respectively, and γa represents the matrix weighting coefficient of the pixel point a.

Correspondingly, the present invention further provides a terminal which includes the image optimization device provided by the present invention. In practical application, the terminal involved in an embodiment of the present invention may be a computer, a mobile computer, a mobile phone, a tablet PC and so on.

### Embodiment Two

FIG. 2 is a flow chart of an image optimization method provided by embodiment two of the present invention. From FIG.2, in the embodiment, the image optimization method provided by the present invention includes the following steps S201 and S202.

In S201, picture depth-of-field information of an image to be optimized is acquired.

In S202, the image to be optimized is optimized according to the picture depth-of-field information.

In an exemplary embodiment, the step S201 includes: the image to be optimized is measured through a dual-camera algorithm, a laser focusing method or a software algorithm to acquire the picture depth-of-field information.

In an exemplary embodiment, when a device includes at least two cameras, the step S201 includes: the picture depth-of-field information is calculated according to the multiple cameras.

In an exemplary embodiment, the step S202 includes: the image to be optimized is partitioned into an indoor area and an outdoor area according to the picture depth-of-field information; and different Auto White Balances (AWB) and/or Auto Exposure Controls (AEC) are applied respectively to the indoor area and the outdoor area.

In an exemplary embodiment, the step that the image to be optimized is partitioned into the indoor area and the outdoor area according to the picture depth-of-field information in the embodiment includes: a depth-of-field value corresponding to each pixel point is determined according to the picture depth-of-field information, and the image to be optimized is partitioned into at least one target area having different depth-of-fields according to the depth-of-field value corresponding to each pixel point, a difference of the depth-of-field value of each pixel point in the target area is less than a threshold; a ratio of depth-of-field values of each target area and its adjacent target area and a ratio of values of white balance/exposure of them are calculated, and the target area and the adjacent target area are respectively determined as the indoor area and the outdoor area when both the ratio of the average depth-of-field values of the target area and its adjacent target area and the ratio of the values of the white balance/exposure of them are greater than the corresponding thresholds.

In an exemplary embodiment, the step S202 includes: a denoising matrix and a sharpening matrix of each pixel point in the image to be optimized are calculated according to the picture depth-of-field information, and the image of each pixel point in the image to be optimized are denoised and sharpened according to the denoising matrix and the sharpening matrix of each pixel point.

In the exemplary embodiments, the step that the denoising matrix and the sharpening matrix of each pixel point in the image to be optimized are calculated according to the picture depth-of-field information in the embodiment includes: the depth-of-field value of each pixel point is determined according to the picture depth-of-field information, the depth-of-field value of each pixel point is normalized to acquire a matrix weighting coefficient of each pixel point, and the denoising matrix and the sharpening matrix of each pixel point are calculated according to the matrix weighting coefficient, a standard denoising matrix and a standard sharpening matrix.

In an exemplary embodiment, the step that the depth-of-field value of each pixel point is normalized to acquire the matrix weighting coefficient of each pixel point in the embodiment includes: the matrix weighting coefficient of each pixel point is acquired by normalizing with a formula γa=Da/(Df-Dn), where a represents any pixel point in the image, n and f represent the pixel points at which a straight line, which passes through a and is vertical to edges of the image, intersects with the edges of the image, Da, Df and Dn represent the depth-of-field values corresponding to the pixel points a, f and n respectively, and γa represents the matrix weighting coefficient of the pixel point a.

Embodiments of the present invention are explained and described below in combination with practical application scenes.

In the following embodiment, a dual-camera mobile phone is used as an example of a terminal for illustration.

### Embodiment Three

In the embodiment, as for a scene in which outdoor and indoor parts occur in an image synchronously and indoor and outdoor light sources and brightnesses greatly differ from each other, indoor and outdoor scenes are quickly positioned by using depth-of-field information and picture statistical information, and different Auto White Balance (AWB) and Auto Exposure Control (AEC) are applied to the indoor and outdoor scenes.

As shown in FIG. 3, an image optimization method provided by the embodiment includes the following steps S301-S303.

In step S301, picture depth-of-field information is calculated by making use of a viewing angle difference between a left camera and a right camera with a dual-camera technology.

The picture depth-of-field information involved in the embodiment may refer to depth-of-field values of all pixel points in the image, and the depth-of-field value of the pixel point is proportional to a distance from the scene of the pixel point to the camera.

In step S302, a boundary of indoor scene and outdoor scene is determined with the depth-of-field information output in S101 and AWB/AEC statistical information of the picture.

The step may include: the depth-of-field value corresponding to each pixel point is determined according to the picture depth-of-field information, the image to be optimized is partitioned into at least two or more than two target areas having different depth-of-fields according to the depth-of-field value corresponding to each pixel point, a difference between the depth-of-field values of adjacent pixel points in the target area is less than a threshold, a ratio of average depth-of-field values of each target area and its adjacent target area and a ratio of average values of white balance/exposure of them are calculated, and a target area and its adjacent target area are respectively determined as an indoor area and an outdoor area when both the ratio of average depth-of-field values of the target area and its adjacent target area and the ratio of average values of the white balance/exposure of them are greater than the corresponding thresholds.

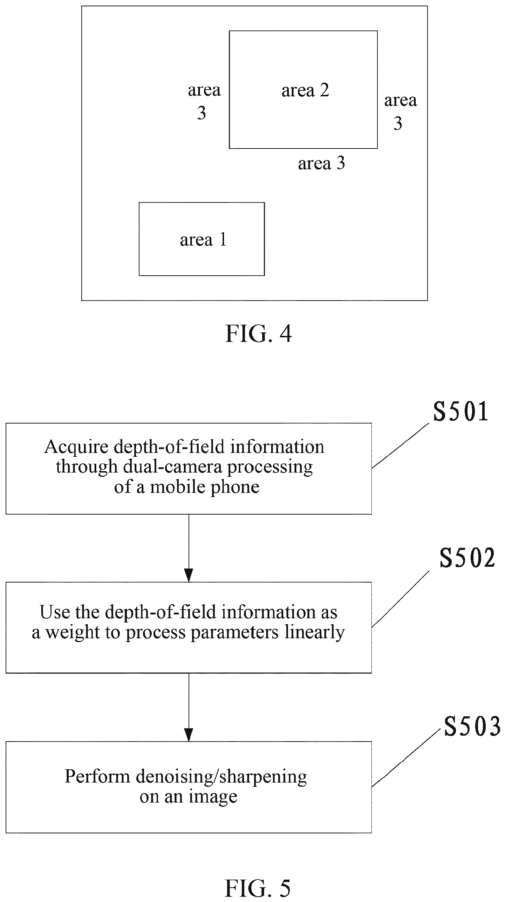

As shown in FIG. 4, an area 2 is a window, an area 1 is an indoor close shot, and an area 3 is an indoor long shot. In practical application, the depth-of-field value of the pixel point within the area 2 indicates that a distance from the corresponding scene to the camera is greater than depth-of-field values of the area 1 and the area 3. Inversely, the indoor scene may also be distinguished from the outdoor scene according to the average depth-of-field value of each area in a preview picture. Because an indoor object has small depth-of-field contrast, and the indoor scene and the outdoor scene have great depth-of-field contrast, and the indoor scene is partitioned from the outdoor scene after boundary threshold processing. For example, the area 3 is generally corresponding to a wall, and the depth-of-field values of all pixel points are essentially the same. In this way, such an area may be taken as a target area.

In practical application, the following conditions may be met for partitioning.
Condition 1): the ratio of average depth-of-field values of different depth-of-field areas (namely the target area and its adjacent area) is greater than the threshold T1, for example, (the average depth-of-field of the area 2/the average depth-of-field of the area 3)> the threshold T1.
Condition 2): the ratio of average values of AWB/AEC statistical information of different depth-of-field areas is greater than the threshold T2, for example, (an average AWB of the area 2/an average AEC of the area 3)> the threshold T2.

T1 and T2 may be set according to an empirical value. In the embodiment, the two conditions need to be met simultaneously, and the depth-of-field area 1 is determined as the outdoor area if the depth-of-field area 1 meets the condition 1) but fails to meet the condition 2).

In step S303, the indoor and outdoor areas determined in the step S102 are processed with the different AWB and AEC algorithms, respectively.

For the AWB, a gray world algorithm and a white world algorithm may be taken synchronously for processing, and outdoor white spots would not participate in calculation of indoor white balance.

### Embodiment Four

In the embodiment, as for a scene in which a depth-of-field extends linearly from near to far in an image, a linear depth-of-field value of the image is used as a linear denoising weight to adjust a denoising intensity, in this way the denoising intensity is gradually intensified from near to far, sharpening parameters are gradually weakened, and the scene is in line with observation experiences of human eyes.

As shown in FIG. 5, an image optimization method provided by the embodiment includes the following steps S501-S503.

In step S501, picture depth-of-field information is calculated by making use of a viewing angle difference between a left camera and a right camera with a dual-camera technology, and a matrix coefficient of each pixel point is acquired by normalizing a depth-of-field value of each pixel point of the image.

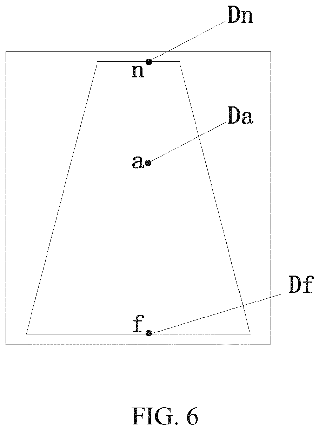

The picture depth-of-field information may be calculated by making use of the viewing angle difference between the left camera and the right camera with the dual-camera technology in existing art. As shown in FIG. 6, the matrix coefficient γ is acquired by normalizing the depth-of-field value of each pixel point of the image.

The matrix coefficient γ may be acquired by normalizing the depth-of-field value of each pixel point of the image with a formula γa=Da/(Df-Dn), where a represents any point in the image, n and f represent the pixel points at which a straight line, which passes through a and is vertical to edges of the image, intersects with the edges of the image; Da, Df and Dn represent the depth-of-field values corresponding to the pixel points a, f and n respectively.

In step S502, a denoising matrix and a sharpening matrix of each pixel point are calculated.

The depth information calculated in step S501 may be used as weight γ to be multiplied by a standard denoising matrix A and a standard sharpening matrix B, respectively.

Herein, the denoising matrix of the point a is A'= γa*A, and the sharpening matrix of the point a is B'=(1-γa)*B.

In step S503, optimization is performed.

A picture P may be denoised and sharpened with the denoising matrix and the sharpening matrix acquired in step S502, where P'=P⊗A', P"=B'⊗P'.

In practical application, a same image may include indoor and outdoor windows while including extended scene, such as a road, namely including the application scenes of embodiment three and embodiment four at the same time. At the moment, the image optimization methods provided by embodiment three and embodiment four may be implemented respectively and sequentially.

Those of ordinary skill in the art shall understand that all or part of the steps of the above method may be implemented by instructing related hardware (such as a processor) through a program, the abovementioned program may be stored in a computer-readable storage medium, such as ROM, a magnetic disk or an optical disk. Alternatively, all or part of the steps of the above embodiments may also be implemented with one or more integrated circuits. Correspondingly, modules/units in the above embodiments may be implemented in form of hardware, for example, their corresponding functions may be implemented through the integrated circuit; or the modules/units in the above embodiments may be achieved in form of a software functional module, for example, their corresponding functions may be achieved by implementing program instructions stored in a memory through the processor. The application would not be limited by combination of the hardware and software in any specific form.

### Industrial Applicability

Embodiments of the present invention provides an image optimization scheme, through which picture depth-of-field information of an image is acquired, and the image is optimized on the basis of the picture depth-of-field information. Because the picture depth-of-field information is proportional to brightness of a corresponding scene of each pixel point of the image, the scene is in line with observation experiences of human eyes after image optimization.

## Claims

1. An image optimization method, comprising:
acquiring picture depth-of-field information of an image to be optimized; and
optimizing the image to be optimized according to the picture depth-of-field information.

2. The image optimization method according to claim 1, wherein acquiring the picture depth-of-field information of the image to be optimized comprises:
measuring the image to be optimized through a dual-camera algorithm, a laser focusing method or a software algorithm to acquire the picture depth-of-field information.

3. The image optimization method according to claim 1 or 2, wherein optimizing the image to be optimized according to the picture depth-of-field information comprises:
partitioning the image to be optimized into an indoor area and an outdoor area according to the picture depth-of-field information; and
applying different Auto White Balances and/or Auto Exposure Controls respectively to the indoor area and the outdoor area.

4. The image optimization method according to claim 3, wherein partitioning the image to be optimized into the indoor area and the outdoor area according to the picture depth-of-field information comprises:
determining a depth-of-field value corresponding to each pixel point according to the picture depth-of-field information; partitioning the image to be optimized into two or more target areas according to the depth-of-field value corresponding to each pixel point, wherein a difference between depth-of-field values of adjacent pixel points in a same target area is less than a threshold; calculating a ratio of average depth-of-field values of each target area and an adjacent target area of that target area and a ratio of average values of white balance/exposure of each target area and an adjacent target area of that target area; and determining a target area and an adjacent target area of that target area as the indoor area and the outdoor area respectively when both the ratio of the average depth-of-field values of the target area and the adjacent target area of that target area and the ratio of the average values of the white balance/exposure of the target area and the adjacent target area of that target area are greater than corresponding thresholds.

5. The image optimization method according to claim 4, wherein optimizing the image to be optimized according to the picture depth-of-field information comprises:
calculating a denoising matrix and a sharpening matrix of each pixel point in the image to be optimized according to the picture depth-of-field information, and denoising and sharpening the image of each pixel point in the image to be optimized according to the denoising matrix and the sharpening matrix of the each pixel point.

6. The image optimization method according to claim 5, wherein calculating the denoising matrix and the sharpening matrix of each pixel point in the image to be optimized according to the picture depth-of-field information comprises:
determining the depth-of-field value of each pixel point according to the picture depth-of-field information, normalizing the depth-of-field value of the each pixel point to acquire a matrix weighting coefficient of each pixel point, and calculating the denoising matrix and the sharpening matrix of the each pixel point according to the matrix weighting coefficient, a standard denoising matrix and a standard sharpening matrix.

7. The image optimization method according to claim 6, wherein normalizing the depth-of-field value of the each pixel point to acquire a matrix weighting coefficient of each pixel point comprises:
performing normalizing by using γa=Da/(Df-Dn) to acquire the matrix weighting coefficient of each pixel point, where a represents any pixel point in the image, n and f represent pixel points at which a straight line, which passes through a and is vertical to edges of the image, intersects with the edges of the image, Da, Df and Dn represent the depth-of-field values corresponding to the pixel points a, f and n respectively, and γa represents the matrix weighting coefficient of the pixel point a.

8. An image optimization device, comprising:
an acquiring module, configured to acquire picture depth-of-field information of an image to be optimized; and
an optimizing module, configured to optimize the image to be optimized according to the picture depth-of-field information.

9. The image optimization device according to claim 8, wherein that the acquiring module acquires the picture depth-of-field information of the image to be optimized comprises:
measuring the image to be optimized through a dual-camera algorithm, a laser focusing method or a software algorithm to acquire the picture depth-of-field information.

10. The image optimization device according to claim 8, wherein that the optimizing module optimizes the image to be optimized according to the picture depth-of-field information comprises:
partitioning the image to be optimized into an indoor area and an outdoor area according to the picture depth-of-field information; and
applying different Auto White Balances and/or Auto Exposure Controls respectively to the indoor area and the outdoor area.

11. The image optimization device according to claim 10, wherein that the optimizing module partitions the image to be optimized into an indoor area and an outdoor area according to the picture depth-of-field information comprises:
determining a depth-of-field value corresponding to each pixel point according to the picture depth-of-field information; partitioning the image to be optimized into two or more target areas according to the depth-of-field value corresponding to each pixel point, wherein a difference between depth-of-field values of adjacent pixel points in a same target area is less than a threshold; calculating a ratio of average depth-of-field values of each target area and an adjacent target area of that target area and a ratio of average values of white balance/exposure of each target area and an adjacent target area of that target area; and determining a target area and an adjacent target area of that target area as the indoor area and the outdoor area respectively when both the ratio of the average depth-of-field values of the target area and the adjacent target area of that target area and the ratio of the average values of the white balance/exposure of the target area and the adjacent target area of that target area are greater than the corresponding thresholds.

12. The image optimization device according to any one of claims 8-11, wherein that the optimizing module optimizes the image to be optimized according to the picture depth-of-field information comprises:
calculating a denoising matrix and a sharpening matrix of each pixel point in the image to be optimized according to the picture depth-of-field information, and denoising and sharpening the image of each pixel point in the image to be optimized according to the denoising matrix and the sharpening matrix of each pixel point.

13. The image optimization device according to claim 12, wherein that the optimizing module calculates the denoising matrix and the sharpening matrix of each pixel point in the image to be optimized according to the picture depth-of-field information comprises:
determining the depth-of-field value of each pixel point according to the picture depth-of-field information, normalizing the depth-of-field value of each pixel point to acquire a matrix weighting coefficient of each pixel point, and calculating the denoising matrix and the sharpening matrix of each pixel point according to the matrix weighting coefficient and a standard denoising matrix and a sharpening matrix.

14. The image optimization device according to claim 13, wherein that the optimizing module normalizes the depth-of-field value of each pixel point to acquire the matrix weighting coefficient of each pixel point comprises:
performing normalizing by using γa=Da/(Df-Dn) to acquire the matrix weighting coefficient of each pixel point, where a represents any pixel point in the image, n and f represent pixel points at which a straight line, which passes through a and is vertical to edges of the image, intersects with the edges of the image, Da, Df and Dn represent the depth-of-field values corresponding to the pixel points a, f and n respectively, and γa represents the matrix weighting coefficient of the pixel point a.

15. A terminal, comprising the image optimization device according to any one of claims 8-14.
